# EUROPÄISCHE PATENTANMELDUNG

(11) **EP 2 523 428 A2**
(43) Veröffentlichungstag der Anmeldung: **14.11.2012**
(21) Anmeldenummer: 12002373.4
(22) Anmeldetag: 30.03.2012
(51) Int. Cl.: H04M 1/05, H04M 1/04

(54) **Elektrisches Installationsgerät mit Ladegerät und Ablagemöglichkeit für ein mobiles Audio- und Kommunikationsgerät**

(30) Priorität: 13.05.2011 DE 102011101412
(71) Anmelder: ABB AG, 68309 Mannheim (DE)
(72) Erfinder: Diehl, Sven, 57078 Siegen (DE)

(57) **Zusammenfassung**

Es wird ein elektrisches Installationsgerät mit Ladegerät (16) und Ablagemöglichkeit für ein mobiles Audio- und Kommunikationsgerät (22) vorgeschlagen, wobei eine mit einem Gerätesockel (15) verbindbare Zentralscheibe (1) mit einer Frontblende (2) vorgesehen ist, an welche ein schwenkbares Ablagebord (3) über ein Scharniergelenk (13) befestigt ist, wobei das Ablagebord (3) eine Ablagefläche (4) für das mobile Audio- und Kommunikationsgerät (22) sowie an seiner anderen Hauptfläche eine in hochgeklappter Position vertikal gerichtete Ablagebord-Rückseite (9) aufweist. Von Wichtigkeit ist, dass eine Leuchte (10) in der Ablagebord-Rückseite (9) integriert ist, deren Energieversorgung über ein verdecktes Kabel (14) erfolgt, welches vom Ladegerät (16) im Gerätesockel (15) über das Scharniergelenk (13) zum schwenkbaren Ablagebord (3) verläuft, dass die Lichtrichtung (12) der Leuchte (10) mittels des via Scharniergelenk (13) einstellbaren Winkels (α) zwischen Frontblende (2) und Ablagebord (3) vorgebbar ist und dass sich in hochgeklappter Position ein Abstand (A) zwischen Frontblende (2) und Ablagebord (3) einstellt, welcher zumindest der Stärke/Höhe eines mobilen Audio- und Kommunikationsgerätes (22) entspricht.

## Beschreibung

Die Erfindung betrifft ein elektrisches Installationsgerät mit Ladegerät und Ablagemöglichkeit für ein mobiles Audio- und Kommunikationsgerät, wobei eine mit einem Gerätesockel verbindbare Zentralscheibe mit einer Frontblende vorgesehen ist, an welche ein schwenkbares Ablagebord über ein Scharniergelenk befestigt ist, wobei das Ablagebord eine Ablagefläche für das mobile Audio- und Kommunikationsgerät sowie an seiner anderen Hauptfläche eine in hochgeklappter Position vertikal gerichtete Ablagebord-Rückseite aufweist.

Aus der DE 10 2009 021 449 A1 ist ein elektrisches Installationsgerät mit einem in Form eines Unterputz-Gerätes ausgebildeten und in eine handelsübliche Unterputzdose montierbaren Gerätesockel bekannt, welcher ein Ladegerät und einen elektrischen Anschluss für ein Wechselspannungsnetz aufweist, wobei frontseitig des Gerätesockels ein Ladeanschlussstecker für den Anschluss eines Mobiltelefons und ein Universalhalter für die Ablage/Halterung dieses Mobiltelefons vorgesehen ist. Der Universalhalter dieser Ladestation ist in Form einer um ungefähr 90° nach unten zu öffnenden, über ein unteres Scharniergelenk an einer Zentralscheibe respektive am Gerätesockel befestigten Klappe ausgebildet, welche eine Auflagefläche zur Ablage des Mobiltelefons bildet. Mit der Klappe ist mindestens eine seitliche, um ungefähr 180° schwenkbare Klappe über ein Scharniergelenk verbunden, um derart eine vergrößerte Auflagefläche zur Ablage des Mobiltelefons zu schaffen.

Der Erfindung liegt die Aufgabe zugrunde, ein optimiertes elektrisches Installationsgerät mit Ladegerät und Ablagemöglichkeit für ein mobiles Audio- und Kommunikationsgerät anzugeben.

Diese Aufgabe wird in Verbindung mit den Merkmalen des Oberbegriffes des Anspruchs 1 erfindungsgemäß dadurch gelöst, dass eine Leuchte in der Ablagebord-Rückseite integriert ist, deren Energieversorgung über ein verdecktes Kabel erfolgt, welches vom Ladegerät im Gerätesockel über das Scharniergelenk zum schwenkbaren Ablagebord verläuft, dass die Lichtrichtung der Leuchte mittels des via Scharniergelenk einstellbaren Winkels zwischen Frontblende und Ablagebord vorgebbar ist und dass sich in hochgeklappter Position ein Abstand zwischen Frontblende und Ablagebord einstellt, welcher zumindest der Stärke/Höhe eines mobilen Audio- und Kommunikationsgerätes entspricht.

Die mit der Erfindung erzielbaren Vorteile bestehen insbesondere darin, dass zwei unterschiedliche Funktionen in einem einzigen elektrischen Installationsgerät realisiert sind, zum Einen die Funktion "Laden eines mobilen Audio- und Kommunikationsgerätes" und zum Anderen die Funktion "Beleuchtung mit einstellbarer Lichtrichtung. Diese beiden Funktionen können gleichzeitig oder getrennt erfolgen.

Des Weiteren wird eine formschöne Integration der zum Ablegen und elektrischen Aufladen eines mobilen Audio- und Kommunikationsgerätes dienenden Zentralscheibe in ein Installationsgeräte-Programm ermöglicht. Das vorgeschlagene elektrische/elektronische Installationsgerät kann bezüglich des erforderlichen Abdeckrahmens in Einfach-Kombination oder in Mehrfach-Kombination (z. B. 2fach-Kombination, 3fach-Kombination, 4fach-Kombination) zusammen mit Schaltern, Dimmern, Steckdosen usw. eingesetzt werden. Derartige Installationsgeräte-Programme sind in vielfältiger Art mit unterschiedlichem Design, unterschiedlicher Farbgebung und unter Einsatz unterschiedlicher Materialien (z. B. Kunststoff, Edelstahl) verfügbar. Auf die vorgeschlagene Weise wird das vorgeschlagene elektrische/elektronische Unterputz-Installationsgerät harmonisch in ein Unterputz-Programm integriert und stellt keinen "Fremdkörper" im Hinblick auf Steckdosen, Schalter, Dimmer, Tastsensoren, EIB/KONNEX-Geräte der Hauskommunikation, Bewegungsmelder usw. dar.

Selbstverständlich ist es zur Realisierung einer Einzelgeräte-Lösung auch möglich, die Zentralscheibe selbst mit einem (festen) Abdeckrahmen auszurüsten.

Zweckmäßige Weiterbildungen der Erfindung sind in den Unteransprüchen gekennzeichnet.

Die Erfindung wird nachstehend an Hand der in der Zeichnung dargestellten Ausführungsbeispiele näher erläutert. Es zeigen:
- Fig. 1: eine perspektivische Sicht auf eine mit einem Abdeckrahmen komplettierte Zentralscheibe eines elektrischen Installationsgerätes zum Ablegen und elektrischen Aufladen eines mobilen Audio- und Kommunikationsgerätes,
- Fig. 2: eine Seitenansicht einer mit Abdeckrahmen komplettierten Zentralscheibe in aufgeklappter Position und abgelegtem mobilen Audio- und Kommunikationsgerät,
- Fig. 3, 4: Ansichten auf die Frontseite einer mit Abdeckrahmen komplettierten Zentralscheibe mit abgelegtem mobilen Audio- und Kommunikationsgerät bei mit unterschiedlichen Winkeln aufgeklappten Positionen,
- Fig. 5, 6: Seitenansichten in zugeklappter Position ohne/mit abgelegtem mobilen Audio- und Kommunikationsgerät,
- Fig. 7: eine Ansicht auf die Frontseite einer Zentralscheibe in zugeklappter Position,
- Fig. 8: eine Seitenansicht des elektrischen Installationsgerätes mit eingeschalteter Beleuchtung,
- Fig. 9: eine elektrische Schaltskizze des elektrischen Installationsgerätes.

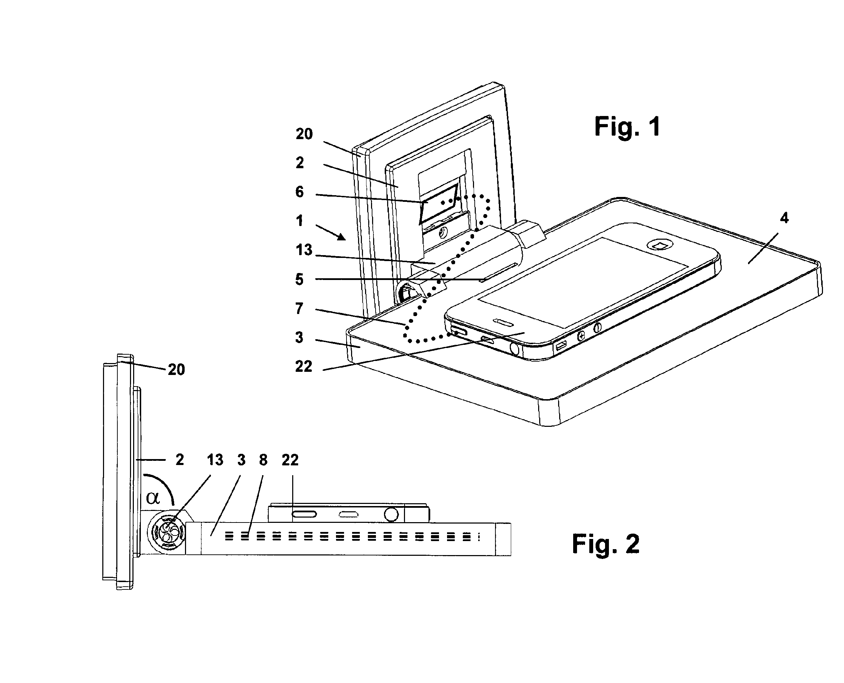

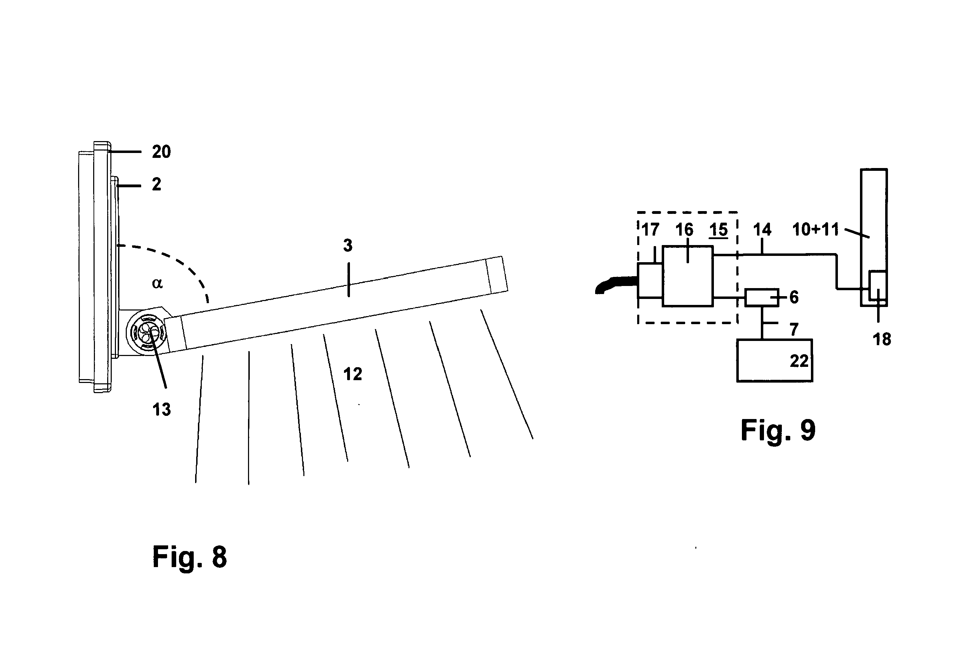

In Fig. 1 ist eine perspektivische Sicht auf eine mit einem Abdeckrahmen komplettierte Zentralscheibe eines elektrischen Installationsgerätes zum Ablegen und elektrischen Aufladen eines mobilen Audio- und Kommunikationsgerätes dargestellt. Die Zentralscheibe 1 setzt sich aus einer Frontblende 2 und einem daran befestigten schwenkbarem Ablagebord 3 zusammen. Die Frontblende 2 wird vom Abdeckrahmen 20 umrahmt und ist im montierten Zustand an einem (nicht gezeigten) in einer normgerechte Unterputz-Gerätedose installierbarem Gerätesockel des elektrischen Installationsgerätes befestigt, welcher ein Ladegerät und einen elektrischen Anschluss für ein Wechselspannungsnetz aufweist - siehe hierzu auch Fig. 9.

Das Ablagebord 3 ist über ein Scharniergelenk 13 an der Frontblende 2 befestigt. Dabei ist ein Schwenkwinkel des Ablagebords 3 gegenüber der Frontblende 2 von mindestens 90° möglich. In aufgeklappter Position kann ein mobiles Audio- und Kommunikationsgerät 22 auf eine Ablagefläche 4 des Ablagebords abgelegt werden. Vorzugsweise ist diese Ablagefläche 4 mit einem adhäsiven Material belegt. Eine Aufladung des Akkumulators des mobilen Audio- und Kommunikationsgerätes 22 kann beispielsweise durch Einstecken eines Kabels 7 in eine elektrische Anschlussschnittstelle (beispielsweise Micro-USB-Standard-Schnittstelle) des mobilen Audio- und Kommunikationsgerätes 22 erfolgen, wobei das weitere Ende des Kabels 7 entweder in eine in der Frontblende 2 vorgesehene elektrische Anschlussschnittstelle 6 eingesteckt ist oder ohne weitere Steckvorrichtung fest mit der Zentralscheibe 1 oder dem Gerätesockel verbunden ist. Dabei kann beispielsweise zusätzlich/alternativ eine elektrische Anschlussschnittstelle 5 in die Ablagefläche 4 integriert sein.

In Fig. 2 ist eine Seitenansicht einer mit Abdeckrahmen komplettierten Zentralscheibe in aufgeklappter Position und abgelegtem mobilen Audio- und Kommunikationsgerät dargestellt. Der Winkel zwischen Ablagebord 3 und Frontblende 2 ist mit α bezeichnet und beträgt beim gezeigten Beispiel 90°. Dabei ist eine weitere Möglichkeit der Aufladung des Akkumulators des mobilen Audio- und Kommunikationsgerätes 22 mittels induktiver Energieübertragung skizziert, wozu eine Primär-Ladespule 8 im schwenkbaren Ablagebord 3 integriert ist. Das mobile Audio- und Kommunikationsgerätes 22 ist mit der erforderlichen Sekundär-Ladespule versehen, entweder durch Integration dieser Sekundär-Ladespule im Gerät selbst oder durch Anschluss eines Adapters mit einer Sekundär-Ladespule am Gerät. Die Energieversorgung der Primär-Ladespule 8 erfolgt über eine innerhalb des Scharniergelenks 13 vom Ablagebord 3 zur Frontblende 2 und zum Gerätesockel geführtes Kabel - siehe Kabel 14 gemäß Fig. 9

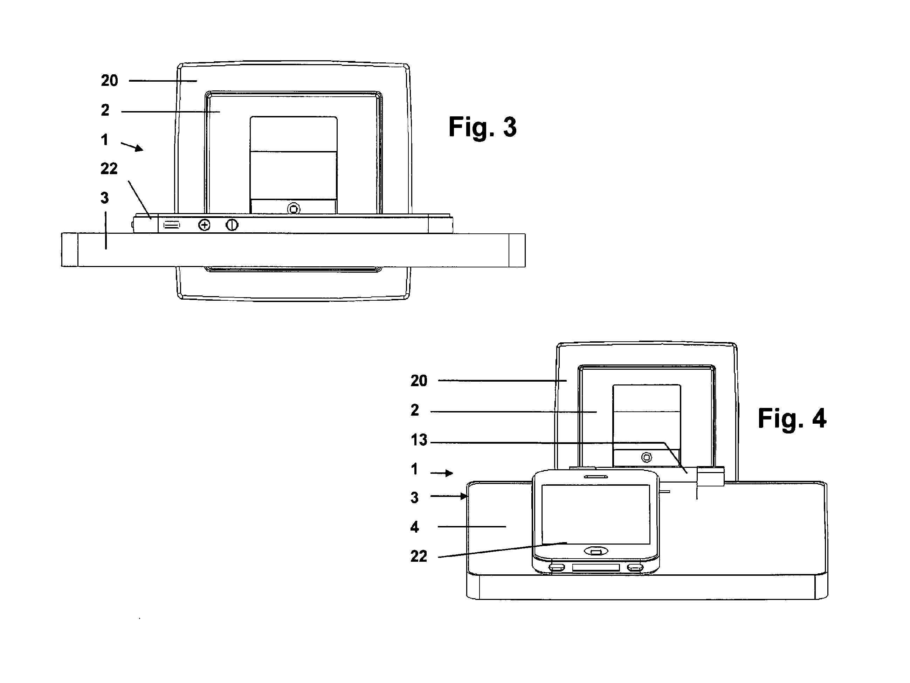

In den Figuren 3 und 4 sind Ansichten auf die Frontseite einer mit Abdeckrahmen komplettierten Zentralscheibe mit abgelegtem mobilen Audio- und Kommunikationsgerät bei mit unterschiedlichen Winkeln aufgeklappten Positionen dargestellt. Während bei der Abbildung gemäß Fig. 3 mittels des Scharniergelenks 13 ein Winkel α von 90° zwischen Ablagebord 3 und Frontblende 2 der Zentralscheibe 1 eingestellt ist, beträgt dieser Winkel α bei der Abbildung gemäß Fig. 4 ungefähr 135°, d. h. das Ablagebord ist quasi "nach vorne gekippt", was den Vorteil hat, dass das Display des auf die Ablagefläche 4 gelegten mobilen Audio- und Kommunikationsgerätes 22 vom Benutzer gut eingesehen werden kann. Die Ablagefläche 4 ist vorzugsweise derart groß bemessen, dass mindestens zwei mobile Audio- und Kommunikationsgeräte 22 nebeneinander abgelegt werden können.

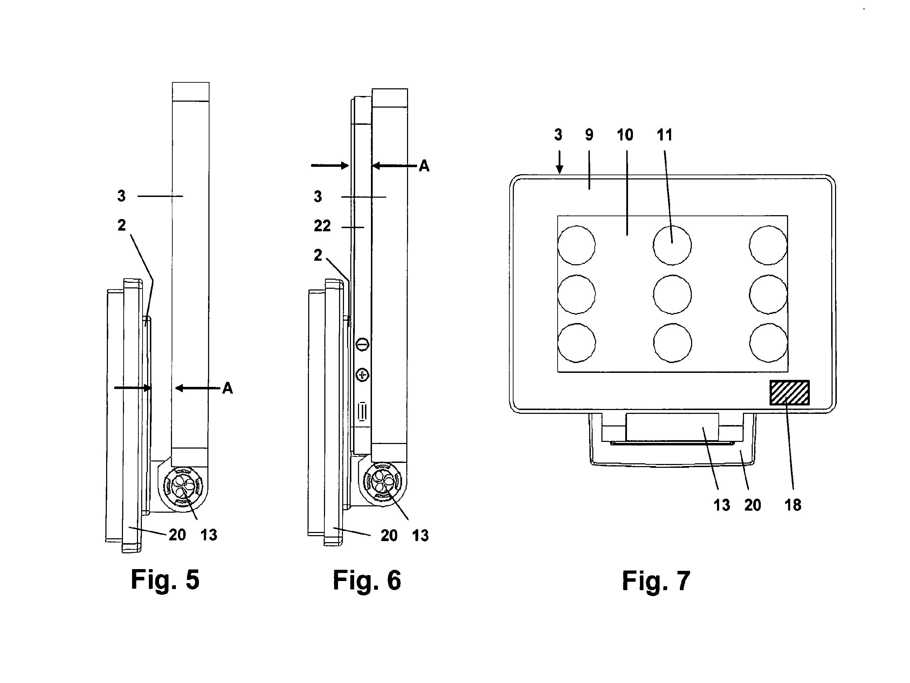

In den Figuren 5 und 6 sind Seitenansichten in zugeklappter Position ohne/mit abgelegtem mobilen Audio- und Kommunikationsgerät dargestellt. In Fig. 5 ist der Abstand A zwischen Frontblende 2 und Ablagebord 3 angegeben. Dieser Abstand A entspricht zumindest der Stärke/Höhe eines üblichen mobilen Audio- und Kommunikationsgerätes 22, so dass es möglich ist, das Ablagebord 3 mit dem darauf abgelegten mobilen Audio- und Kommunikationsgerät 22 zusammenzuklappen respektive hochzuklappen, wodurch das mobile Audio- und Kommunikationsgerät 22 quasi zwischen Frontblende 2 und Ablagebord "eingeklemmt" wird, wie dies in Fig. 6 gezeigt ist.

In Fig. 7 ist eine Ansicht auf die Frontseite einer Zentralscheibe in zugeklappter - gleichbedeutend mit hochgeklappter respektive zusammengeklappter - Position dargestellt. Dabei ist gezeigt, dass eine Leuchte 10 in die Ablagebord-Rückseite 9 des Ablagebords 3 integriert ist. Die Leuchte 10 wird aus einer Vielzahl von LEDs 11 gebildet - im gezeigten Ausführungsbeispiel aus neun LEDs 11. Zum Einschalten / Ausschalten der Leuchte 10 durch den Benutzer ist zweckmäßig ein Schalter 18 in die Ablagebord-Rückseite 9 integriert. In Fig.7 sind zusätzlich - wie auch in den weiteren Figuren 5, 6 und 8 - das Scharniergelenk 13 und der Abdeckrahmen 20 bezeichnet.

In Fig. 8 ist eine Seitenansicht des elektrischen Installationsgerätes mit eingeschalteter Beleuchtung dargestellt. Dabei ist gezeigt, dass der Benutzer durch geeignetes Schwenken des Ablagebords 3 gegenüber der Frontblende 2 um den Winkel α eine Lichtrichtung 12 der eingeschalteten Beleuchtung 10 in gewünschter Weise einstellen / vorgeben kann, z. B kann eine Lichtrichtung 12 mit gewünschtem Winkel α zum Fußboden oder zu einer gegenüberliegenden Wand gewählt werden.

In Fig. 9 ist eine elektrische Schaltskizze des elektrischen Installationsgerätes dargestellt. Es ist ein Gerätesockel 15 mit darin integriertem Ladegerät 16 inklusive Anschluss 17 für ein 230V-Wechselspannungsnetz skizziert, wobei dieses Ladegerät 16
- über die Anschlussschnittstelle 6 und das Kabel 7 den Akkumulator des mobilen Audio- und Kommunikationsgerätes 22 auflädt,
- die Leuchte 10 mit LEDs 11 mit elektrischer Energie speist,
- ein Schalter 18 zum Einschalten / Ausschalten der Leuchte 10 dient.

Dabei verläuft ein verdecktes Kabel 14 vom Ladegerät 16 des Gerätesockels 15 und das Scharniergelenk 13 zum schwenkbaren Ablagebord 3.

### Bezugszeichenliste

- 1: Zentralscheibe eines elektrischen Installationsgerätes zum Ablegen und elektrischen Aufladen eines mobilen Audio- und Kommunikationsgerätes
- 2: Frontblende
- 3: schwenkbares Ablagebord
- 4: Ablagefläche
- 5: elektrische Anschlussschnittstelle
- 6: elektrische Anschlussschnittstelle
- 7: Kabel
- 8: Primär-Ladespule
- 9: Ablagebord-Rückseite
- 10: Leuchte
- 11: LEDs
- 12: Lichtrichtung
- 13: Scharniergelenk
- 14: Kabel
- 15: Gerätesockel
- 16: Ladegerät
- 17: Anschluss für Wechselspannungsnetz
- 18: Schalter
- 19: -
- 20: Abdeckrahmen
- 21: -
- 2: mobiles Audio- und Kommunikationsgerät

- A: Abstand zwischen Frontblende und Ablagebord im zugeklappten Zustand
- α: einstellbarer Winkel zwischen Frontblende und Ablagebord

## Patentansprüche

1. Elektrisches Installationsgerät mit Ladegerät (16) und Ablagemöglichkeit für ein mobiles Audio- und Kommunikationsgerät (22), wobei eine mit einem Gerätesockel (15) verbindbare Zentralscheibe (1) mit einer Frontblende (2) vorgesehen ist, an welche ein schwenkbares Ablagebord (3) über ein Scharniergelenk (13) befestigt ist, wobei das Ablagebord (3) eine Ablagefläche (4) für das mobile Audio- und Kommunikationsgerät (22) sowie an seiner anderen Hauptfläche eine in hochgeklappter Position vertikal gerichtete Ablagebord-Rückseite (9) aufweist, **dadurch gekennzeichnet, dass** eine Leuchte (10) in der Ablagebord-Rückseite (9) integriert ist, deren Energieversorgung über ein verdecktes Kabel (14) erfolgt, welches vom Ladegerät (16) im Gerätesockel (15) über das Scharniergelenk (13) zum schwenkbaren Ablagebord (3) verläuft, dass die Lichtrichtung (12) der Leuchte (10) mittels des via Scharniergelenk (13) einstellbaren Winkels (α) zwischen Frontblende (2) und Ablagebord (3) vorgebbar ist und dass sich in hochgeklappter Position ein Abstand (A) zwischen Frontblende (2) und Ablagebord (3) einstellt, welcher zumindest der Stärke/Höhe eines mobilen Audio- und Kommunikationsgerätes (22) entspricht.

2. Elektrisches Installationsgerät nach Anspruch 1, **dadurch gekennzeichnet, dass** die Leuchte (10) aus einer Vielzahl von LEDs (11) gebildet ist.

3. Elektrisches Installationsgerät nach Anspruch 1 oder 2, **dadurch gekennzeichnet, dass** ein Schalter (18) zum Einschalten / Ausschalten der Leuchte (10) in der Ablagebord-Rückseite (9) integriert ist.
